# EUROPEAN PATENT APPLICATION

(11) **EP 2 146 523 A1**
(43) Date of publication of application: **20.01.2010**
(21) Application number: 08008420.5
(22) Date of filing: 05.05.2008
(51) Int. Cl.: H04W 4/00

(54) **Method for preparing a handover between transmission modes in a wireless communications network**

(71) Applicant: Nokia Siemens Networks Oy, 02610 Espoo (FI)
(72) Inventor: Holma, Harri, 00660 Helsinki (FI); Ranta-Aho, Karri, 02650 Espoo (FI); Toskala, Antti, 02180 Espoo (FI)
(74) Representative: Bruglachner, Thomas E.

(57) **Abstract**

A method for preparing a handover from a first transmission mode to a second transmission mode in a wireless communications network (UTRAN) including a user equipment device (UE) and a network infrastructure device, comprises: in the first transmission mode, transmitting downlink data (HS-PDSCH) from the network infrastructure device and receiving the data at the user equipment device (UE) in a discontinuous reception mode (DRX) thereby providing reception-void time intervals in the first transmission mode; and measuring a signal quality in the second transmission mode during at least one of the reception-void time intervals (RVT) of the first transmission mode.

## Description

The present invention relates to a method for preparing a handover between transmission modes in a wireless communications network, as for example a handover from a first technology to a second technology transmission protocol. The invention further relates to a wireless communications network suitable for performing the method and a computer programme product.

Today's wireless communications networks evolved from 2G-systems to 3G-systems and probably will involve LTE or WiMax technologies in the near future. However, 3G-systems, in particular UMTS-networks, will still need to support second generation 2G-systems, such as GSM. On the one hand the reason is downgrade compatibility. On the other hand the 3G-network should provide for fallback technologies if the current technology, for example HSPA, is not available. Due to the widespread coverage of 2G-Systems even UMTS networks should be able to provide costumers with 2G-service when 3G breaks down, for instance. This may occur when a handheld device moves from a cell which is serviced by a node B base station to a close area which is only serviced by a second generation GSM base station. The situation may occur because network providers would not always upgrade their entire base station network.

A handover from one system to another (UMTS to GSM) is called an inter system and/or inter frequency handover. Mostly the term inter-system handover refers to a handover between UMTS and GSM. Inter-frequency handover may also refer to a handover between two UMTS frequencies. An inter frequency handover, for example, between two UMTS carrier frequencies is sometimes necessary because UMTS-networks may operate at more than one carrier frequency in one geographical area and thereby providing larger radio capacity than operating only on one carrier frequency.

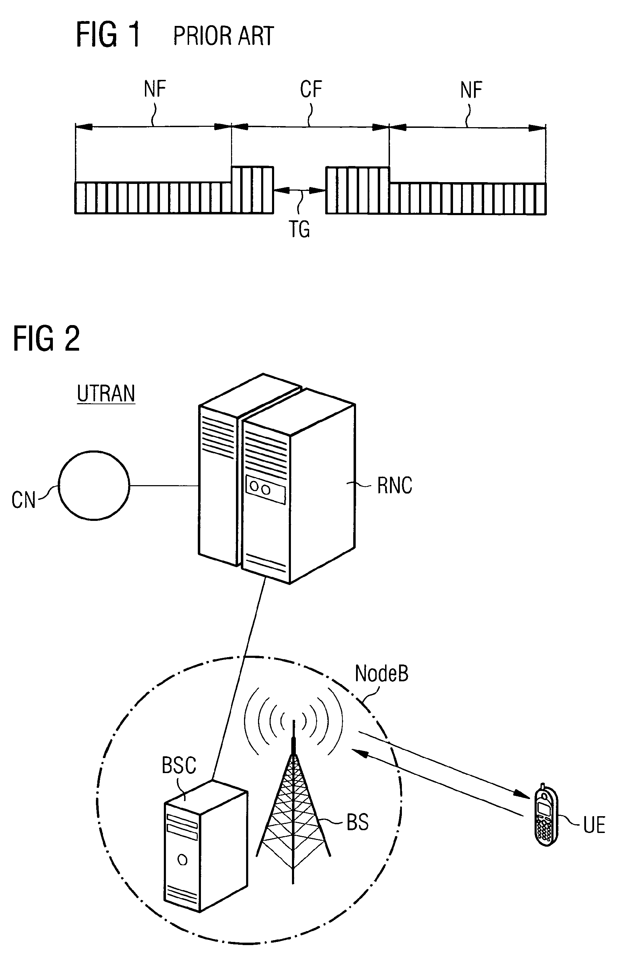

Conventionally, a handover from HSPA (High Speed Packed Access), which is a radio interface protocol in the UMTS system, to GSM-protocols is.prepared by a so called compressed mode. The compressed mode allows the user equipment (UE) to make necessary measurements on the GSM system or on the different WCDMA carrier frequencies contemporaneously with an HSPA link coupled with the relevant node B. In the compressed mode transmission and reception gaps are introduced, in which the user equipment is temporarily not required to either transmit, receive or neither transmit nor receive. Thus during these gaps the user equipment can carry out GSM measurements in a different frequency range. Figure 2 shows, for example, a picture of a compressed frame CF in between two normal frames NF is shown. In a transmission gap region TG of a compressed frame CF data transmission is not permitted. In order to keep frame errors in the compressed frame CF similar to frame errors in normal frames NF the transmitting power needs to be increased which is reflected by the higher bars of the compressed frame CF in figure 1.

A disadvantage of the conventional strategy using the compressed mode in, for example, HSPA is that it is very time consuming. A conventional inter system handover procedure may take up to 5 seconds which sometimes leads a termination of on ongoing voice call or data connection of the user equipment. Usually, first, the user equipment sends measurement reports to the radio network controller upon which the radio network controller makes a synchronous radio bearer reconfiguration to start the compressed mode. Then, the user equipment performs GSM reception level measurements and sends the results to the radio network controller. The user equipment further decodes the base station identity code (BSIC) and transmits the results to the radio network controller. Finally, the base station controller (BSC) or radio network controller sends the handover command to the user equipment (UE). However, if a UMTS signal drops quickly the before mentioned procedure takes to much time until the inter system measurements and the handover is completed. Therefore, it is desirable to have an improved method for preparing a handover between different transmission modes in a wireless communications network.

Therefore, the present disclosure provides for a method for preparing a handover from a first transmission mode to a second transmission mode in a wireless communications network including a user equipment device and a network infrastructure device. The method comprises in the first transmission mode, transmitting downlink data from the network infrastructure device and receiving the data at a user equipment device in a discontinuous reception mode, thereby providing reception-void time intervals in the first transmission mode and measuring a signal quality in the second transmission mode during at least one of the reception-void time intervals of the first transmission mode.

In a discontinuous reception (DRX) the user equipment, such as a mobile device, may receive data packets periodically in consecutive time windows leaving time intervals between those packets in which no reception occurs. In particular, when 3G-HSPA systems are operated in a circuit switched voice data transmission mode the data rate is comparatively low such that a sufficiently long reception-void time interval occurs that may be utilized for measuring the signal quality in the second transmission mode, such as GSM mode.

The first and the second transmission mode may be implemented as circuit switched voice data transmission modes. For example, circuit switched voice over high speed packet access (CS over HSPA) is considered a viable strategy for voice transmission in the third generation wireless communications networks. For example, similar to voice over IP (VoIP) CS over HSPA may improve the capacity compared to conventional circuit switched over dedicated channels (CS over DCH) modes. An implementation with CS voice over HSPA improves the battery life of the hand held devices as user equipment (UE) thereby prolonging the talk time for a user. However, if a handover to a second generation network protocol, such as GSM is necessary, the relevant measurements can be done proactively already during data exchange in the first transmission mode (3G) without resorting to the compressed mode.

According to an aspect of this disclosure, the method for preparing the handover further comprises transmitting uplink data from the user equipment device to the network infrastructure device in a discontinuous transmission mode, thereby providing transmission-void time intervals in the first transmission mode. Measuring the signal quality in the second transmission mode is then made when the transmission-void time intervals and the reception-void time intervals at least partially coincide.

Similar to the discontinuous reception mode, discontinuous transmission (DTX) can be implemented according to 3GPP release specifications and results in time intervals when no transmission from the user equipment to the network infrastructure devices occurs. Usually measuring the signal quality in the second transmission mode by the user equipment comprises changing a transceiver from a first transmission frequency to a second transmission frequency which is different from the first transmission frequency. Preferably, the reception-void time interval and the transmission-void time interval should be recognized when performing the measurements.

Therefore, two cases may be identified a) The UE can make GSM measurements with DRX periods while having an uplink transmission running, and b) The UE can make GSM measurements only during simultaneous DRX and DTX modes.

According to another aspect of the method for preparing a handover, measuring signal quality is initiated in response to a command sent from the network infrastructure device as a function of the signal quality in the first transmission mode. If the network infrastructure device recognizes that, for example, the first transmission mode signals deteriorates, for example, because the user equipment leaves the cell area covered by the current 3G-base station measurements performed by the user equipment can be activated proactively.

Alternatively, The UE is provided with a signal level threshold below which it is allowed to start automatically measurements in the other respective radio technology or frequency without an approval or clearance of the network control. The UE can also monitor a change of the signal quality, and if the signal level drops very rapidly this could be used as a trigger for starting the measurements. According to an aspect of the method for preparing a handover, a first threshold is used to automatically start the measurements in other radio technology or frequency. Further a second threshold (typically reflecting a worse own frequency signal quality than the first threshold) is used to initiate reporting the measurement result from the user equipment to the network.

Due to the discontinuous data exchange modes DRX and DRX there will be transmission and reception gaps in which typically the UE will shut off its transmitter and receiver to save battery. However in certain cases it is allowed to use these off-periods for measurements. Generally, this could be done even without specific commands from the network.

According to yet another aspect the method comprises, that, at the user equipment device, transmitting uplink data to the network infrastructure device is delayed as a function of received downlink data for increasing an overlap of transmission-void time intervals and reception-void time intervals. For example, the user equipment may synchronize discontinuous transmission of uplink data packets with a detected reception-void time interval so as to maximize the potential measurement time.

According to a modification of the method, in the first transmission mode a predetermined number of downlink data packets having a predetermined transmission time interval are transmitted from the network infrastructure device to the user equipment device in a downlink time window. Further, in the first transmission mode, a downlink acknowledgement data packet is transmitted from the user equipment device to the network infrastructure device in response to each received downlink data packet. The transmission of the downlink acknowledgement data packet is delayed by a predetermined downlink acknowledgement time. A reception-void time interval is then the difference between the downlink time window and the sum of the transmission time interval, a downlink acknowledgement time and a downlink acknowledgement time transmission interval.

In particular, in CS over HSPA only a fraction of the available downlink time is used for the downlink data packets, for example, only one downlink data packets is transmitted in one downlink time window, wherein the reminder of the downlink time window is void of transmission. A possible retransmission can sometimes cause two packets to be transmitted one after each other. The user equipment usually cannot perform measurements in the second transmission mode when sending the acknowledgement data packets in the first one. Hence, time and length of the acknowledgement data packets need to be subtracted from the entire downlink time window.

Sometimes, between the two consecutive downlink acknowledgement data packets, corresponding to the two attached downlink data packets, a downlink transmission channel quality indicator packet is transmitted from the user equipment device to the network infrastructure device. The channel quality indicator (CQI) is a parameter indicative of a downlink transmission channel quality. By feeding back the CQI to the base station or radio network controller the necessity of a handover can be detected as it informs the network the level of the downlink signal the UE is experiencing.

In particular, if according to standardized protocols the transmission of a channel quality indicator is mandatory, the presented method may comprise: suppressing the transmission of the CQI data for measuring a downlink channel quality between the two consecutive downlink acknowledgement data packets in the first transmission mode, i.e. CQI is sometimes not transmitted in order to maximize the uplink transmission gap and provide better measurement performance.

According to another variant of the method, in the first transmission mode, uplink data packets are transmitted from the user equipment device to the network infrastructure device. In the first transmission mode, further, an uplink acknowledgement data packet is transmitted from the network infrastructure device to the user equipment device in response to each received uplink data packet, wherein the transmission of the uplink acknowledgement data packet is delayed by a predetermined uplink acknowledgement time. The transmission-void time interval is then the difference between a time window defined by two consecutively transmitted uplink data packets and the sum of two transmission time intervals and the uplink acknowledgement time.

Preferably, the uplink data packets are transmitted such that an uplink acknowledgement packet is immediately transmitted after a downlink acknowledgement data packet is transmitted. This leads to a large potential measurement time interval where no transmission from the user equipment to the network infrastructure device and from the network infrastructure device to the user equipment occurs in the first transmission mode.

The uplink data packets may comprise a preamble and enhanced dedicated physical data channel packet and a postamble.

In some embodiments of the method, transmitting the uplink data packets comprises deploying a hybrid automatic request process. Hybrid automatic request (HARQ) is a variation of the ARQ error control method. Accordingly, for example, cyclic redundancy check bits are added to the data to be transmitted as error detection information and request for a retransmission. HARQ provides for forward error correction bits for better performance under poor signal conditions so that some bit errors can be corrected in the receiver by computational methods and only larger numbers of bit errors lead to the need to request for a retransmission. The hybrid automatic request processes can be allocated to the user equipment device by the network infrastructure device. Generally, the HARQ technique can be used both in downlink and in uplink transmissions in HSPA. There are several (6-8) parallel HARQ processes. It is possible to limit the allowed transmission timing of UE by allowing a limited number of HARQ processes.

In certain embodiments, the transmission time interval is 2 ms, and the downlink time window is 20 ms. As network infrastructure devices, base stations, base station controllers, node Bs or radio network controllers may be considered. User equipment, for example, can comprise cell phones, personal digital assistants having wireless communication capacities, or other portable units having wireless communication capabilities.

This disclosure additionally provides for a wireless communications network comprising at least one programmable user equipment device and at least one programmable network infrastructure device wherein the devices are implemented as to execute a method for preparing a handover from a first transmission mode to a second transmission mode, for example, as disclosed above.

Further, a computer programme product is provided initiating a prosecution of a method according to one or more aspects of the above mentioned method on a programmable user equipment device and/or a programmable network infrastructure device.

Finally, a recording medium having stored said computer programme is provided. The recording medium may comprise any known type of data storage or transmission media including a magnetic medium, optical medium, hard disks, USB memory sticks and the like. The computer programme product, for example, can be implemented as a downloadable file provided by a server in the internet.

In the following, certain aspects of the invention are further illustrated with reference to the accompanying drawings in which
Figure 1 shows an illustration of a compressed mode according to the prior art;
Figure 2 shows an embodiment of a wireless communications network according to an embodiment of the invention;
Figure 3 shows a timing arrangement of data packet exchange according to an implementation of the method for preparing a handover; and
Figure 4 shows a flow diagram for another embodiment of a method for preparing a handover.

Figure 2 shows an embodiment of a wireless communications network UTRAN which, for example, can be implemented as a UMTS network having also GSM features. Figure 2 shows a user equipment UE which, for instance, can be a mobile phone or some other portable device having a wireless connection capability. Further, communications network infrastructure is shown, for example, comprising the core network CN, a radio network controller RNC and a node B. The node B includes a base station BS and a base station controller BSC.

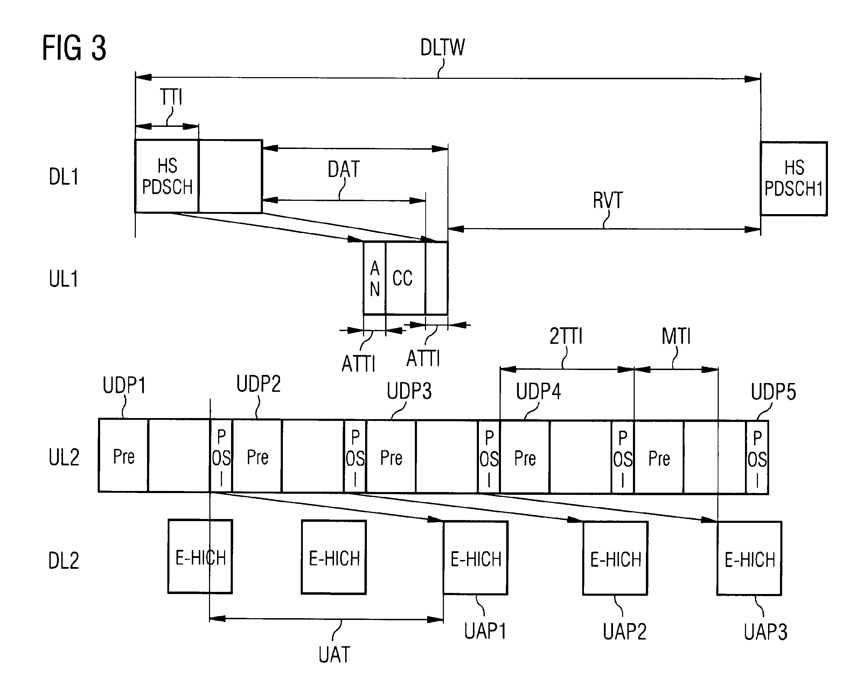

All devices can be implemented as programmable devices and may be adapted to execute a method for preparing and performing a handover between different transmission modes, as for example illustrated in the following disclosure. In particular, when voice data transmission is concerned, CS over HSPA as a first transmission mode is applicable in 3GPP communications network environments. This disclosure proposes a method when no compressed mode with continuous packet connectivity is necessary. The exchange of data packets in a CS over HSPA scenario, for example, in a network as shown in figure 2, is illustrated in more detail with respect to figure 3.

The diagram in figure 3 shows the timely interdependencies of packets exchanged in a CS over HSPA protocol. Time t is running from left to right. DL1, UL1, UL2 and DL2 refer to downlink traffic from the base station or radio network controller RNC to the user equipment UE (DL1), uplink traffic from the UE to the RNC in response to DL1 (UL1), uplink traffic from the e UE to the RNC carrying voice data (UL2) and downlink traffic in response to uplink traffic UL2 (DL2).

DL1 shows a downlink time window DLTW being for example 20 ms. In particular, according to the 3GPP Release 7 specifications, continuous packet connectivity (CPC) for HSPA is included for enabling discontinuous transmission DTX and reception DRX. In particular, when voice services are implemented, the connection data rate is relatively low. A typical data rate for CS over HSPA is about 12.2 kbps. In such a configuration the UE terminal is allowed to use DTX and DRX very efficiently.

DL1 shows two voice data packets HS-PDSCH1 and HS-PDSCH2 that are transmitted over the air from the RNC or BS, respectively, every 20 ms. The first transmission is the actual voice packet and the second transmission is the potential HARQ retransmission if the initial transmission attempt did not succeed. The transmission time interval TTI for a single downlink packet HS-PDSCH1, HS-PDSCH2 is, for example, 2 ms. Hence, during 16 ms of the downlink time window DLTW no data packets are sent from the RNC to the UE when CS over HSPA is deployed.

As shown with respect to UL1 a corresponding UE sends an acknowledgement data packet A/N1, A/N2 after receipt of the voice data packet HS-PDSCH1, HS-PDSCH2 to its base station. The delay from the packet reception and the transmission of the acknowledgement packet corresponds to a downlink acknowledgement time DAT which is usually 5 ms. The length of the acknowledgement data packet is a downlink acknowledgement time transmission interval ATTI of roughly 0.7 ms.

When two downlink data packets HS-PDSCH1, HS-PDSCH2 are consecutively transmitted, a gap between the two downlink acknowledgement data packets A/N1, A/N2 of 1.3 ms occurs. This time gap is used for transmitting a CQI from the UE to the RNC via the UL1. Hence, in the downlink DL1, a time gap or time interval in which no reception at and no transmission from the UE occurs, has duration of 10.3 ms denoted as RVT. Therefore, considering downlink traffic and its acknowledgement by the UE a reception-void time interval RVT of 10.3 ms is present. Compared to the conventional compressed mode for R99 this potential time window RVT for measurements in another technology, such as GSM, is clearly increased. In the compressed mode for R99 typically only seven slots leading to a window of 4.7 ms every 40 ms is available. Hence, according to this aspect of the proposed method, the UE may switch to a GSM-mode and a carrier frequency different from the HSPA carrier frequencies for a time period considerably longer than conventionally.

The lower two rows UL2 and DL2 relate to the uplink configuration. In principle, the UE cannot measure GSM 1800 MHz contemporaneously with a transmission on 2100 MHz as it is required for UMTS because the close proximity of the transmission frequency usually causes too much interference in the receiver trying to measure on the receive frequency. Hence, the general uplink transmission is also configured as discontinuous transmission DTX. For example, the present standard requires an uplink transmission gap simultaneously with DRX mode for enabling the DRX in CPC operation. UL2 shows five possible uplink transmission locations for uplink data packets UDP1-UDP5. The potential uplink data packets UDP1-UDP5 each comprise a hybrid automatic request process HARQ in terms of an enhanced dedicated physical data channel E-DPDCH, a preamble and a postamble.

Figure 3 shows five potential uplink transmission locations for uplink data packets UDP1-UDP5 in the corresponding downlink time window DLTW. One HARQ process out of eight is allocated per user. In this constellation the same HARQ process repeats itself every 8^{th} TTI, i.e. every 16 ms. The uplink transmission UL2 moves relative to the downlink transmission DL1. In principle, any of the five uplink data packets UDP1-UDP5 is feasible.

Additionally, if the UE transmits an uplink data packet comprising an enhanced dedicated physical data channel packet (E-DPDCH) an uplink acknowledgement data packet UAP1-UAP3 in terms of an E-DCH hybrid ARQ indicated channel (E-HICH) is required. The corresponding E-HICH is sent from the Node-B to the UE via DL2. The E-HICH is sent from the Node-B and received from the UE by a delay of an uplink acknowledgement time UAT.

In order to provide a maximum measurement time interval MTI in which the user equipment may change into a GSM mode and measure the signal quality, a user equipment UE arranges to transmit the uplink data packets UDP1-UDP5 such that a time interval in the uplink UL2 where no transmission or reception occurs, coincides largely with the reception-void time RVT. It can be seen from figure 3 that usually at least for 4 ms to 5 ms time for an inter system measurement, i. e. where the user equipment switches to GSM mode and performs measurements, and no up- or downlink traffic according to HSPA discontinuous transmission and reception in present. This is a larger potential measurement time interval MTI than the conventional compressed mode provides for.

Further it can be left to discretion to the UE to delay its uplink transmission UL2 for ensuring that there is sufficient time available for such measurements. Then, the UE may combine voice packet transmission to a time slot or location in UL2 to have a maximum MTI. It is an advantage of this embodiment of a method for preparing a handover that due to continuous packet connectivity in DRX and TDRX the UE always can perform inter system measurements. This allows the network infrastructure, for example, in terms of the RNC to trigger those measurements without switching to a compressed mode in HSPA. Therefore, the actual handover procedure can be done on a short time scale. This is because necessary measurements may be triggered very timely.

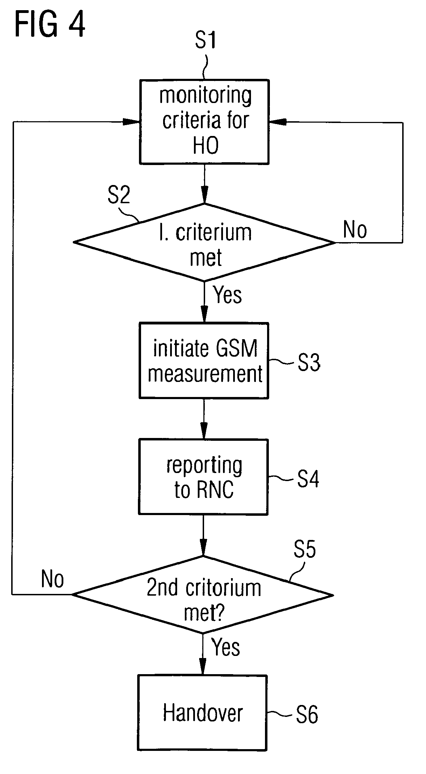

Figure 4 shows, for example, a flow chart for another implementation of the method for preparing an inter system handover. The before explained aspects with respect to scheduling up and downlink traffic and performing measurement can be combined with the method aspects as referred to in the following. In a first step S1 the RNC monitors if a first criterion for a hard inter system handover is fulfilled. For example, a criterion could be a threshold for the received signal code power RSCP being -108 dBm or below. However, also a downlink Ec/No or the uplink transmission power or other criteria can be used. If in step S2 the RNC concludes that the first criterion is met a command is sent to the UE to start inter system handover measurements. Consequently, in step S3, the UE commences the event triggered measurements when, for example, the RSCP has dropped below -108 dBm. In step S4 the UE reports, for example, periodically every 500 ms the measurement results to the RNC.

In step S5 a second stricter criterion is inspected with respect to the signal quality. If the second criterion is met the actual handover procedure is initiated in step S6. For example, the second criterion could be a threshold for the RSCP being below -114 dBm. If this second stricter threshold is not exceeded in step S5, the method returns to step S1. Otherwise the actual IS-HO procedure is launched in response to a command by the RNC in step S6.

Alternatively, the RNC submits to the UE an RSCP threshold value, e. g. -108 dBm. When the RSCP drops below this threshold, the UE will automatically start GSM measurements without any further command or clearance by the RNC. The UE will also start reporting periodically the GSM measurement results back to the RNC. Then, the RNC decides by use of other criteria when to perform the actual GSM handover. If the RSCP improves again reaches the threshold (-108 dBm) from below, teh UE stops GSM measurements, and the measurement reporting. It is a benefit that there is no delay in deploying the measurements since the UE will start those by itself without any commands from RNC. Naturally, a single-shot type of a measurement reporting could also be applied.

The RNC and UE can be implemented such that the RNC requests the UE to execute the inter system or inter frequency measurements through sending a corresponding command to the UE, for example, a measurement control message of the radio resource control protocol RRCP. The measurement control message then triggers the measurements even if UE would not perform any measurements at this stage of suboptimal UMTS local signals. This is needed if the network wants to hand the UE over to another frequency or radio technology due to some other reason than the signal level in the current frequency getting weak.

Triggering the inter system or inter frequency measurements may constitute an advantage if the RNC due to load balancing reasons wants to expel the UE from the current carrier frequency radio system and, for example, transfer the radio link to a lower generation protocol, in particular if only voice data is exchanged.

It is one advantage of the foregoing implementations of a method for a handover that no direct changes to the L1 layer are necessary. The node B algorithms need not be changed. The only changes necessary can be implemented by a software update of the RNC. Now, implementing the disclosed method, the RNC does not need to start a compressed mode measurement but receives inter system measurement reports from the UE automatically on request. Then, the RNC lets the UE to be handed over the GSM-system. Further, no changes are required to the actual CS core network 3.

By using the disclosed method, a handover from UMTS to GSM is substantially faster. Further, no synchronous reconfiguration procedure is necessary as opposed to conventional compressed mode strategies. Although, the foregoing examples refer to a handover from UMTS to GSM, the method can be employed in connection with other radio access technologies. If discontinuous transmission or reception protocols can be implemented, the allocation of measurement times in reception-void and transmission-void time intervals improves the actual handover procedure. As an example, other radio access technologies like GSM, LTE, UMTS,and TDD are mentioned. A person skilled in the art will appreciate the application of the before disclosed methods, strategies, systems and devices in further scenarios.

### List of reference signs:

- NF: normal frame
- CF: compressed frame
- TG: time gap
- UTRAN: UMTS Terrestrial Radio Access Network
- CN: core network
- RNC: radio network controller
- BS: base station
- BSC: base station controller
- UE: user equipment
- DLTW: downlink time window
- TTI: transmission time interval
- DAT: downlink acknowledgement time
- RVT: reception-void time
- ATTI: acknowledgement time transmission interval
- UDP1-UDP5: uplink data packet
- MTI: measurement time interval
- UAT: uplink acknowledgement time
- UAP1-UAP3: uplink acknowledgement packet
- S1-S6: method steps

## Claims

1. A method for preparing a handover from a first transmission mode to a second transmission mode in a wireless communications network (UTRAN) including a user equipment device (UE) and a network infrastructure device (RNC), comprising:
in the first transmission mode, transmitting downlink data (HS-PDSCH) from the network infrastructure device (Node B) and receiving the data at the user equipment device (UE) in a discontinuous reception mode (DRX) thereby providing reception-void time intervals in the first transmission mode; and
measuring a signal quality in the second transmission mode during at least one of the reception-void time intervals (RVT) of the first transmission mode.

2. The method of claim 1, wherein the first transmission mode and the second transmission mode are circuit switched voice data transmission modes.

3. The method of claim 1 or 2, further comprising:
transmitting uplink data from the user equipment device (UE) to the network infrastructure device (RNC) in a discontinuous transmission mode (DTX) thereby providing transmission-void time intervals in the first transmission mode;
wherein measuring the signal quality in the second transmission mode is made when the transmission-void time intervals and the reception-void time intervals at least partially coincide.

4. The method of any one of claims 1 - 3, wherein the first transmission mode is a circuit switched over high speed packet access (CS over HSPA) mode in a universal mobile telecommunications system (UMTS) communications network.

5. The method of claim 4, wherein no compressed mode is deployed in the first transmission mode.

6. The method of any one of claims 1 - 5, wherein the second transmission mode is circuit switched mode in a global system for mobile communication (GSM) communications network.

7. The method of any one of claims 1 - 7, wherein measuring the signal quality is initiated by the user equipment device as a function of a signal quality in the first transmission mode wherein a threshold value for the signal quality in the first transmission mode for initiating measuring the signal quality is provided by the network infrastructure device.

8. The method of any one of claims 1 - 7, wherein measuring the signal quality is initiated in response to a command sent from the network infrastructure device (RNC) as a function of a signal quality in the first transmission mode.

9. The method of any one of claims 1 - 8, wherein measuring the signal quality by the user equipment (UE) comprises changing a transceiver from a first transmission frequency to a second transmission frequency differing from the first transmission frequency.

10. The method of any one of claims 3 - 9, wherein at the user equipment device (UE) transmitting of uplink data to the network infrastructure device (RNC) is delayed as a function of received downlink data for increasing an overlap of transmission-void time intervals and reception-void time intervals.

11. The method of any one of claims 1 - 10, comprising:
in the first transmission mode, transmitting a predetermined number of downlink data packets (HS-PDSCH1, HS-PDSCH2) having a predetermined transmission time interval (TTI) from the network infrastructure device (RNC) to the user equipment device (UE) in a downlink time window (DTW); and
in the first transmission mode, transmitting a downlink acknowledgment data packet (A/N1, A/N2) from the user equipment device (UE) to the network infrastructure device (RNC) in response to each received downlink data packet (HS-PDSCH1, HSPDSCH2), the transmission of the downlink acknowledgment data packet (A/N1, A/N2) being delayed by a predetermined downlink acknowledgement time (DAT);
wherein the reception-void time interval is the difference between the downlink time window (DLTW) and the sum of the transmission time interval (TTI), the downlink acknowledgement time (DAT) and a downlink acknowledgement time transmission interval (ATT1).

12. The method of claim 11, wherein at least two downlink data packets (HS-PDSCH1, HS-PDSCH2) are transmitted attached to each other in one downlink time window (DTW).

13. The method of claim 12, wherein between the two consecutive downlink acknowledgment data packets (A/N1, /N2) corresponding to the two attached downlink data packets (HS-PDSCH1, HS-PDSCH2) a transmission channel indicator (CQI) packet is transmitted from the user equipment device (UE) to the network infrastructure device (RNC).

14. The method of claim 13, wherein the transmission of the channel quality indicator (CQI) data is suppressed for measuring a downlink channel quality between the two consecutive downlink acknowledgment data packets (A/N1, A/N2) in the first transmission mode.

15. The method of any one of claims 1 - 14, comprising:
in the first transmission mode, transmitting uplink data packets (UDP1-UDP5) from the user equipment device (UE) to the network infrastructure device (Node B); and
in the first transmission mode, transmitting an uplink acknowledgment data packet (E-HICH) from the network infrastructure device (Node B) to the user equipment device (UE) in response to each received uplink data packet (HS-PDSCH), the transmission of the uplink acknowledgment data packet (E-HICH) being delayed by a predetermined uplink acknowledgement time (UAT);
wherein the transmission-void time interval (MTI) is the difference between a time window defined by two consecutively transmitted uplink data packets and the sum of two transmission time intervals (TTI) and the uplink acknowledgement time (UAT).

16. The method of claim 11 and 15, wherein the uplink data packets (UDP1-UDP5) are transmitted such that an uplink acknowledgement packet (UAP1) is immediately transmitted after a downlink acknowledge data packet (A/N2) is transmitted.

17. The method of claim 15 or 16, wherein the uplink data packets (UDP1-UDP5) comprise a preamble (Pre), an enhanced dedicated physical data channel (E-DPDCH) packet and a postamble (Post).

18. The method of any one of claims 11 - 17, wherein transmitting the uplink data packets (UDP1-UDP5) comprises deploying a hybrid automatic request (HARQ) process.

19. The method of claim 18, wherein the hybrid automatic request (HARQ) process is allocated to the user equipment device (UE) by the network infrastructure device (RNC).

20. The method of any one of claims 11 - 19, wherein the transmission time interval (TTI) is 2 ms.

21. The method of any one of claims 11 - 20, wherein the downlink time window (DTW) is 20 ms.

22. The method of any one of claims 1 - 21, wherein the network infrastructure device (RNC) is one of the group of a base station, a base station controller, a node B, or a radio network controller.

23. A wireless communications network (UTRAN) comprising at least one programmable user equipment device (UE) and at least one programmable network infrastructure device , wherein the devices are implemented as to execute a method according to any one of claims 1 - 22.

24. A computer programme product initiating a prosecution of a method according to any one of claims 1 - 22 when installed on a programmable user equipment device (UE) and/or a programmable network infrastructure device.

25. A recording medium having stored the computer programme product of claim 24.
